Europäisches Patentamt

European Patent Office

Office européen des brevets

(11) Publication number: **0 289 753 B1**

# EUROPEAN PATENT SPECIFICATION

(45) Date of publication of patent specification: **21.10.92** (51) Int. Cl.⁵: **G01N 27/30**, G01N 27/40

(21) Application number: **88104120.6**

(22) Date of filing: **15.03.88**

---

(54) A PROCESS FOR THE MANUFACTURE OF A RESPONSIVE MEMBRANE FOR USE IN CHLORINE ION SELECTIVE ELECTRODE.

---

(30) Priority: **16.03.87 JP 38651/87 U**

(43) Date of publication of application:
**09.11.88 Bulletin 88/45**

(45) Publication of the grant of the patent:
**21.10.92 Bulletin 92/43**

(84) Designated Contracting States:
**DE FR GB IT**

(56) References cited:
**EP-A- 0 189 741**
**DE-A- 3 701 819**
**GB-A- 2 062 245**
**US-A- 4 629 744**

(73) Proprietor: **HORIBA, LTD.**
**2 Miyanohigashi-machi Kissyoin**
**Minami-ku Kyoto(JP)**

(72) Inventor: **Uematsu, Hiroaki**
**10-12, 3-chome Wakakusa**
**Kusatsu-City Shiga-Prefecture(JP)**

(74) Representative: **TER MEER - MÜLLER - STEIN-MEISTER & PARTNER**
**Mauerkircherstrasse 45**
**W-8000 München 80(DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

DETAILED DESCRIPTION OF THE INVENTION

[Field of the Invention]

The present invention relates to a process for the manufacture of a responsive membrane for chlorine ion selective electrode used for the measurement of body liquids, such as blood, urine and the like.

[Prior Art]

The conventional responsive membrane for use in chlorine ion selective electrode includes for example ① a plastic membrane formed of a vinyl chloride resin (hereinafter referred to as PVC) with a responsive material and a solvent (for example, a solvent having a high dielectric constant, such as pentanol and ortho-nitrophenyloctylether, or a solvent having a low dielectric constant, such as dialkyl phthalate and dialkyl adipate) enclosed therein, and ② a plastic membrane formed of an epoxy resin with a responsive material and a solvent (same as the above described solvent) enclosed therein.

However, the above described responsive membrane ① has shown disadvantages in that the membrane is inferior in stability and the responsive material rises to the surface about one week after the formation thereof, and in addition, the initial electrode is inferior in performance, the drift in the blood being increased, and also the useful life time being remarkably shortened to an extent of 1 to 2 weeks. In addition, the above described responsive membrane ② has shown disadvantages in that since the internal resistance is remarkably high to an extent of $1 \times 10^9$ $\Omega$ , the joint portion of the responsive membrane with the electrode body is difficult to insulate, whereby the deterioration of the joint portion leads to the remarkably shortened storage time and useful life time, and further the high internal resistance leads to the susceptibility to the induction.

In order to improve the above described responsive membranes ①, ②, the responsive membrane according to Japanese Patent Application No. 56778/1984 (Japanese Patent Laid-Open No. 233541/1985) has been applied by the present applicant. In this responsive membrane, quarternary ammonium salts as a responsive material and solvents are enclosed in a special plastic membrane comprising an epoxy resin and PVC and in order to reduce the internal resistance with the epoxy resin as the base and enclose the responsive material in the epoxy resin under the more stable condition, PVC and a plasticizer thereof are added and an aliphatic polyamine is used as a hardening agent of the epoxy resin.

The responsive membrane having such a construction exhibits superior results in the intial condition and the measurement of blood and urine.

[Problems to be Solved by the Invention]

However, this membrane has shown disadvantages in the following points:
(1) At first, a method of manufacturing the responsive membrane is complicated.
(a) Since the responsive membrane begins to be hardened from immediately after the addition of the hardening agent in the formation of the membrane, the agitation after the addition of the hardening agent must be carried out at temperatures as low as possible (about 4°C) and it is necessary to volatilize tetrahydrofurane used as a volatilizing solvent for forming the membrane within 24 hours. And, if these operations are neglected, a partial solidification occurs before the beginning of the formation of the responsive membrane not to form a uniform membrane.
(b) In order to secure the hardening with the hardening agent after the formation of the membrane, it is necessary to place the membrane in a thermostat maintained at 40 ± 5°C for 20 to 30 days. If a temperature within the thermostat is raised to about 60°C, the solvent rises to the surface prior to the hardening of the membrane. In addition, if the membrane is not placed in the thermostat for 20 days or more, the hardening becomes insufficient.
Unless special attention is paid to the above described two points (a), (b), it is difficult to obtain a uniform and equalized in performance responsive membrane.
(2) Disadvantages have occurred in that the storage time and the useful life time are reduced and the fluctuation is increased depending upon electrodes.
If the responsive membrane is stored at room temperature for a long term, the solvent rises to the surface of the responsive membrane. Since the responsive material is flown into the sample together with the solvent also after the use thereof was begun, disadvantages have occurred in that also the useful life time is short to an extent of 2 to 3 months and fluctuated depending upon electrodes.

The present invention was achieved in view of the above described matters.

It is an object of the present invention to provide a responsive membrane for use in chlorine ion selective electrode which shows a reduced fluctuation depending upon electrodes, having a stabilized performance unsusceptible to an influence by other anions and a superior special feature of long storage time and useful life time, and being capable of manufacturing in a short time.

[Measures for Solving the Problems]

In order to achieve the above described object, according to the present invention the solvent is removed from the composition of the responsive membrane to increase a quantity of the responsive material and PVC.

It has been considered that the solvent serves as a plasticizer and assists the movement (or the ion exchange) of the responsive material, which is an anionic ion exchange material, in the boundary surface even in the composition of the responsive membrane for use in chlorine ion selective electrode.

It was found from the investigation by the present inventor that in the case where PVC was added to the epoxy resin and the aliphatic polyamine was used as the hardening agent, chlorine contained in PVC is joined to an amino group ($NH_2$) contained in the aliphatic polyamine during the hardening to form a stronger matrix and in addition, the solvent as the plasticizer of PVC was not required and the ion exchange in the boundary surface could be smoothly carried out without using the solvent since also the quarternary ammonium salt as the responsive material was liquid. In addition, it is considered that PVC serves to not only reduce the internal resistance of the membrane but also increase the adhesive strength of the membrane to the electrode body.

Accordingly, a responsive membrane for use in chlorine ion selective electrode according to the present invention is characterized by comprising an epoxy resin and a vinyl chloride resin at a ratio of 8 : 1 to 1 : 2 by weight with a quarternary ammonium salt and a hardening agent added.

BRIEF DESCRIPTION OF THE DRAWINGS

Fig. 1 is a sectional view showing one example of the flow-through type electrode with the responsive membrane according to the present invention incorporated therein;

Fig. 2 is a diagram showing a difference of drift due to a difference of the hardening agent;

Fig. 3(A), (B), (C), (D), is a diagram showing the interferential influences of other anions in the chlorine ion electrode; and

Fig. 4 is a diagram showing a change of the chlorine ion electrode in sensitivity with the lapse of time.

In the above described characteristical construction,

(1) A methyl-substituted bisphenol type epoxy resin is preferably used. An epoxy resin of this type includes for example Epichlon 840 (Trade name, manufactured by Dainippon Ink Co., Ltd.).

(2) It is desirable to use PVC having a polymerization degree $\overline{P}$ of about 1,100 to 2,800, preferably about 2,500.

(3) It is a reason why a mixture ratio of the epoxy resin and PVC is selected at 8 : 1 to 1 : 2 by weight that if the quantity of PVC is 1/8 or less based on the quantity of the epoxy resin of 1, the internal resistance is increased by one figure ($10^8$ Ω or more ) while if the quantity of PVC is 2/1 or more based on the quantity of the epoxy resin of 1, the drift in the serum is suddenly increased, which are both inconvenient.

(4) It is desirable that the epoxy resin is used at a ratio of 30 to 50 % by weight based on the whole composition. Inconveniences occur in that in the case where said ratio by weight is 30 % or less, the drift in the serum is increased even though the quantity of the hardening agent is increased while in the case where said ratio by weight is 50 % or more, the internal resistance is increased and the useful life time in the standard solution is reduced.

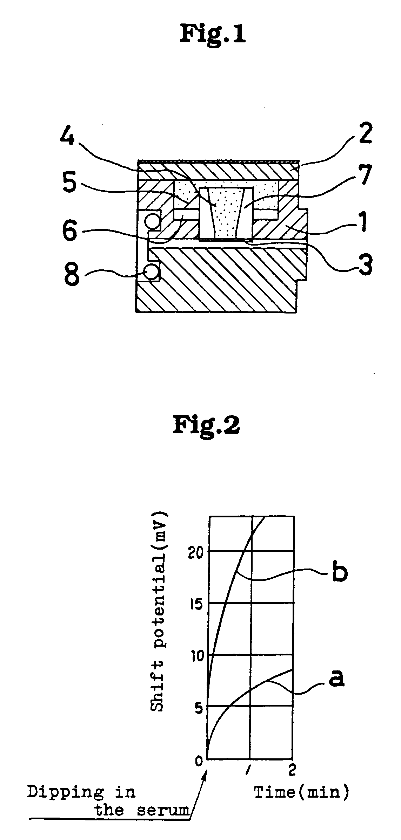

(5) Of the amine series of hardening agent, it is desirable to use the aliphatic polyamine. A difference of the drift in the serum due to a difference of the hardening agent is shown in Fig. 2. Referring to Fig. 2, a is a curve showing the case where triethylene tetramine (TETA), which is most general among aliphatic polyamines, is used as the hardening agent while b is a curve showing the case where a diethylene triamine adduct, which is denatured aliphatic polyamine, is used as the hardening agent.

(6) It is desirable that the hardening agent is used at a ratio of 40 to 60 parts by weight based on the epoxy resin of 100 parts. Because in the case where the quantity of the hardening agent is 40 parts or less, the drift in the serum is increased regardless of the quantity of the epoxy resin.

(7) It is desirable that for example trioctylmethylammonium chloride (TOMA), tridecylmethylammonium chloride (TDMA) and tetraoctylammonium chloride are used as the quarternary ammonium salt used for the responsive material. It is desirable that the responsive material is used at a ratio of 0.4 to 30 % by weight based on the whole composition. Because if it is 0.4 % or less, the response speed is low at a low concentration while if it is 30 % or more, a selection ratio is reduced.

(8) It is desirable that a film thickness is about 0.2 to 0.3 mm. In the case where the membrane is stuck with tetrahydrofurane containing PVC at a ratio of 0.2 to 2 %, the above described film thickness leads to the most easy adhesion of the membrane to the electrode body.

[Preferred Embodiments]

The preferred embodiments of the present invention are below described.

In the manufacture of the responsive membrane, the composition shown in Table 1 was used.

## Table 1

| Epoxy resin | Epichlon 840 | 420 mg | 37 w% |
| Hardening agent | TETA | 168 mg | 15 w% |
| PVC | Polymerization degree $\bar{P}$ = 2,500 | 120 mg | 32 w% |

| Quarternary ammonium salt | TOMA | 60 mg | 16 w% |
| Film thickness | 0.25 mm | | |

The manufacturing procedure of the responsive membrane is as follows:

① At first, PVC is dissolved in tetrahydrofurane (volatilizing solvent) in an Erlenmeyer flask.

② Then, TOMA as the quarternary ammonium salt is added.

③ Then, Epichlon 840 as the epoxy resin is added and a rotor (10 to 15 mm) is put in the Erlenmeyer flask to stir about 10 minutes. Since Epichlon 840 is considerably viscous, an insufficient stirring leads to a partial solidification of the epoxy resin in the formation of the membrane.

④ Then, TETA as the hardening agent is added and the mixture is stirred about 10 minutes.

⑤ Then, the mixture is transferred into a Teflon schale and covered with two pieces of filter paper and a glass plate to purge with nitrogen for 24 hours in a desiccator.

⑥ The resulting responsive membrane is transferred into a glass schale and stored in a drier at a temperature of 60 ± 5°C. In this time, attention is paid not so as to be exposed to a light. The suitable storage time is 4 to 5 days.

⑦ Finally, the responsive membrane is taken out of the drier and stored in the desiccator (room temperature). In this time, attention is paid not so as to be exposed to a light.

The responsive membrane (having a diameter of 60 mm) manufactured in the above described manner is cut in a diameter of 5 mm with a punch and the cut-out responsive membrane (having a diameter of 5 mm) is incorporated in for example a flow-through type electrode.

Fig. 1 shows one example of a flow-through type electrode. Reference numeral 1 designates a cell, reference numeral 2 designating a cover, reference numeral 3 designating a responsive membrane, reference numeral 4 designating an internal solution, reference numeral 5 designating an internal electrode, reference numeral 6 designating a filler such as silicon resin, reference numeral 7 designating a fixed ring, and reference numeral 8 designating a sealing member such as O-ring.

Subsequently, respective three pieces of electrode comprising the responsive membrane (without using a solvent) according to the present invention and the responsive membrane (using a solvent) obtained according to said Japanese Patent Laid-Open No. 233541/1985 incorporated therein are prepared and mounted on an electrolyte analyzer to measure a chlorine ion in a serum and a urine of mankind with the results shown in Table 2 and Table 3.

That is to say, Table 2 and Table 3 shows a concentration of chlorine ion in the serum and the urine (unit: mmol/liter), respectively. In addition, referring to both tables, I shows a comparative example, in which the conventional responsive membrane using a solvent is used, and II shows a preferred embodiment of the present invention, in which the responsive membrane without using a solvent according to the present invention is used. S1 - - - designate a sample number and the fluctuation is a difference between the maximum value and the minimum value.

## Table 2

| Response membrane | Electrode No. | S1 | S2 | S3 | S4 | S5 |
|---|---|---|---|---|---|---|
| I | 1 | 103.5 | 116.7 | 87.9 | 108.2 | 124.9 |
| | 2 | 104.9 | 118.0 | 87.9 | 108.7 | 126.2 |
| | 3 | 104.2 | 116.5 | 87.9 | 108.5 | 124.3 |
| | Fluctuation | 1.4 | 1.5 | 0.0 | 0.5 | 1.9 |
| II | 1 | 104.7 | 116.3 | 87.9 | 107.9 | 124.4 |
| | 2 | 103.7 | 116.2 | 88.4 | 107.4 | 123.6 |
| | 3 | 103.8 | 116.2 | 87.5 | 108.3 | 123.8 |
| | Fluctuation | 1.0 | 0.1 | 0.9 | 0.9 | 0.8 |

5

## Table 3

| Responsive membrane | Electrode No. | S1 | S2 | S3 | S4 | S5 | S6 | S7 |
|---|---|---|---|---|---|---|---|---|
| I | 1 | 96 | 120 | 90 | 146 | 88 | 120 | 53 |
| | 2 | 101 | 125 | 94 | 152 | 94 | 123 | 57 |
| | 3 | 92 | 117 | 86 | 145 | 85 | 115 | 50 |
| | Fluctuation | 9 | 8 | 8 | 7 | 9 | 8 | 7 |
| II | 1 | 102 | 125 | 92 | 157 | 94 | 122 | 52 |
| | 2 | 98 | 125 | 93 | 157 | 94 | 125 | 52 |
| | 3 | 97 | 124 | 92 | 156 | 92 | 125 | 53 |
| | Fluctuation | 5 | 1 | 1 | 1 | 2 | 3 | 1 |

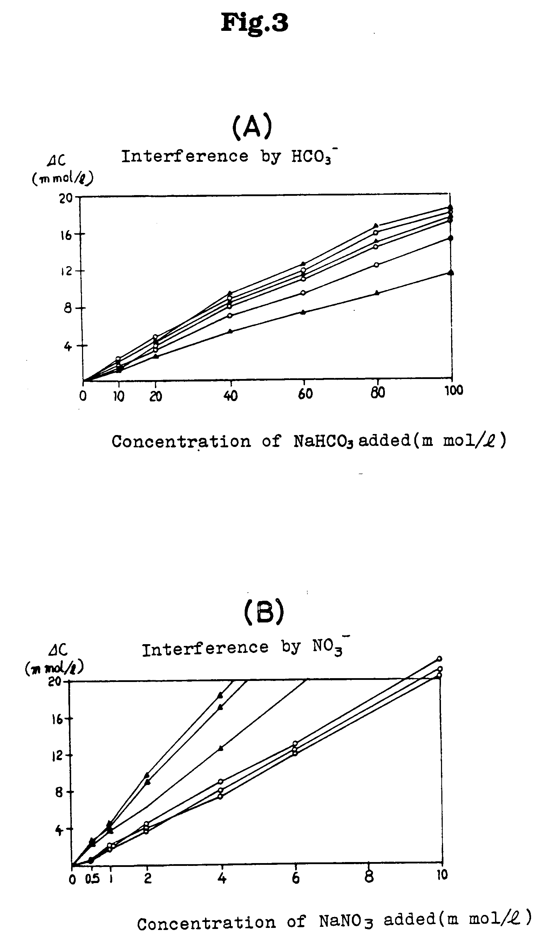

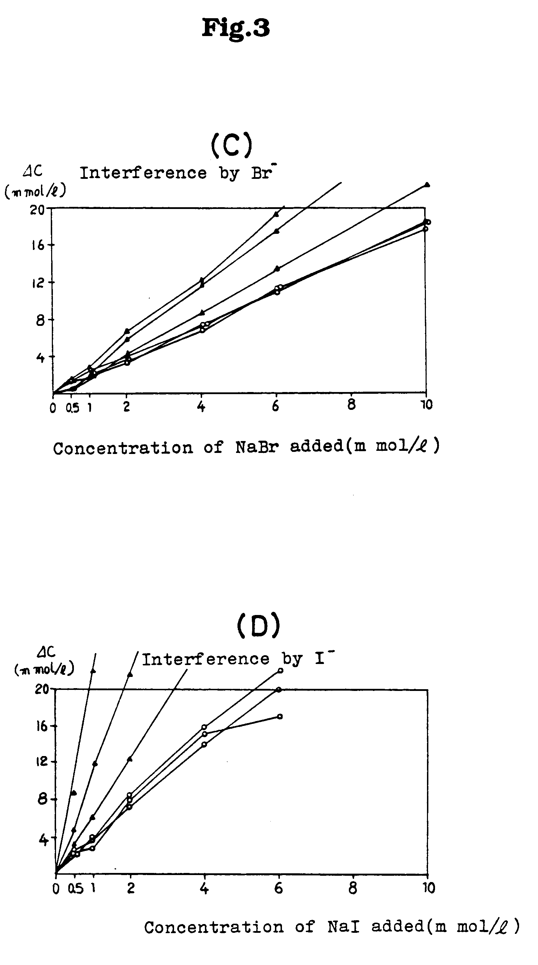

And, in order to investigate the interferential influences of other anions, sample solutions comprising the standard solution, which is obtained by adding a trisbuffer to an aqueous solution of NaCl having a concentration of 100 mmol/liter, with $NaHCO_3$, $NaNO_3$, NaBr and NaI added thereto were measured using the above described each electrode to measure a difference of concentration from the standard solution with graphs shown in Fig. 3(A), (B), (C), (D).

That is to say, Fig. 3(A), (B), (C), (D) shows an interferential influence of $HCO_3^-$, $NO_3^-$, $Br^-$ and $I^-$, respectively. A curve represented by $\Delta$ - $\Delta$ shows the case as the comparative example, in which the conventional responsive membrane using a solvent is used, and a curve represented by $O$ - $O$ shows the case, in which the responsive membrane without using a solvent according to the present invention.

It is found from the above described Tables 2, 3 that the fluctuation in the responsive membrane according to the present invention is smaller than that in the conventional responsive membrane. In addition, it is found from Fig. 3(A), (B), (C), (D) that the responsive membrane according to the present invention exhibits a little interferential influence of other anions and a little fluctuation in comparison with the conventional responsive membrane.

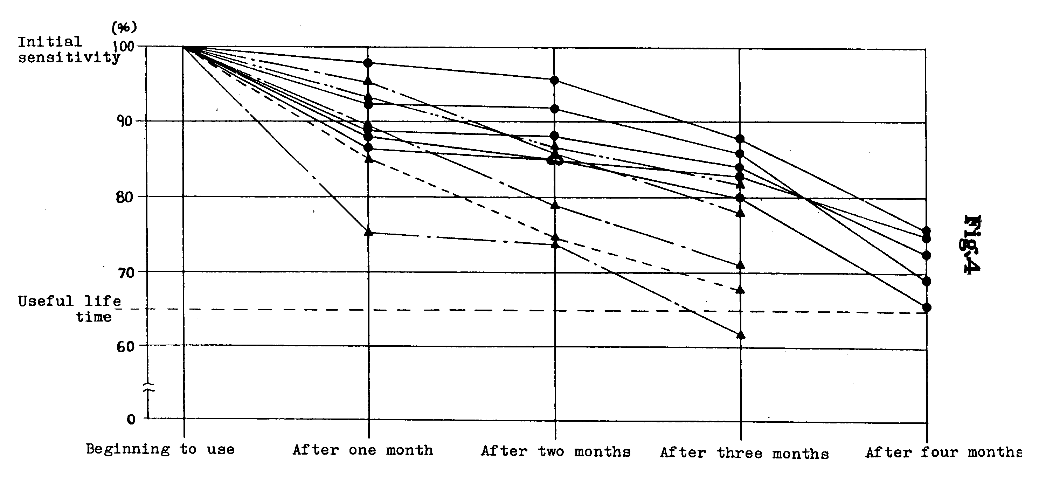

In addition, Fig. 4 shows the measurement results of the selectivity (at a chlorine concentration of $10^{-2}$ mmol/liter) of a chlorine ion electrode. I shows the conventional responsive membrane using a solvent as the comparative example while II shows the responsive membrane without using a solvent according to the present invention.

6

## Table 4

| Coexisting ion | I | II |
|---|---|---|
| $Br^-$ | 1.67 | 1.31 |
| $I^-$ | 4.76 | 1.67 |
| $NO_3^-$ | 2.78 | 1.35 |
| $CH_3COO^-$ | 0.09 | 0.09 |
| $HCO_3^-$ | 0.02 | 0.30 |
| $F^-$ | 0.07 | 0.20 |
| $SO_4^{2-}$ | 0.01 | 0.01 |

It is found from the above described Table 4 that the responsive membrane according to the present invention is improved in selectivity for other anions in comparison with the conventional responsive membrane.

It is found from the above description that the responsive membrane according to the present invention is improved in performance in comparison with the conventional responsive membrane using a solvent.

And, since the solvent rises to the surface when stored for a long time at room temperature, it has been necessary to store the conventional responsive membrane in a dark and cool place but there is no possibility that the solvent rises to the surface even though the responsive membrane according to the present invention is stored in a place having a temperature higher than room temperature, so that an advantage occurs in that the responsive membrane can be stored for a long time of 1 to 2 years.

In addition, electrodes were formed using the conventional responsive membrane and the responsive membrane according to the present invention and the change of sensitivity of the electrodes with a lapse of time was investigated in the case where the standard solution and the serum were alternately and continuously measured by means of the electrodes with the graph shown in Fig. 4. A curve represented by ▲ - ▲ shows the change of the electrode in sensitivity with a lapse of time in the case where the conventional responsive membrane is used as the comparative example while a curve represented by ● - ● shows that in the case where the responsive membrane according to the present invention is used.

It is found from the above Fig. 4 that all of the electrodes obtained by using the responsive membrane according to the present invention have a useful life time of 4 months or more and a small fluctuation contrary to the electrodes obtained by using the conventional responsive membrane having a useful life time of merely 2 to 3 months and the fluctuation in it.

In addition, 20 to 30 days have been required for completely hardening the conventional responsive membrane in its manufacturing process but since the responsive membrane according to the present invention can be hardened at a higher temperature of about 60°C, which is an allowable temperature of PVC, an advantage occurs in that merely 4 to 5 days are required for completely hardening the responsive membrane according to the present invention and as a result, it can be manufactured in a short time.

[Effects of the Invention]

As above described, the responsive membrane for use in chlorine ion selective electrode according to the present invention comprises an epoxy resin and a vinyl chloride resin at a ratio of 8 : 1 to 1 : 2 by weight with a quarternary ammonium salt and a hardening agent added and does not comprise a solvent, it exhibits a small fluctuation depending upon electrodes and have a stabilized performance of being hardly influenced by other anions as well as superior characteristics such as a long storage time and a long useful life time. And, it has a superior advantage in that it can be manufactured in a short time.

## Claims

1. A process for the manufacture of a responsive membrane for use in chlorine selective electrodes, **characterized by** dissolving PVC in a volatilizing solvent, adding a quaternary ammonium salt, adding an epoxy resin in a ratio of 8:1 to 1:2 with respect to PVC, stirring the mixture, adding a hardening agent, stirring the mixture, removing the the volatilizing solvent and heating the mixture without exposition to light at a temperature of 60±5 ° C.

2. The process according to claim 1, **characterized in that** the epoxy resin is used at a ratio of 30 to 50 % by weight,based on the whole composition.

3. The process according to claim 1, **characterized in that** the quaternary ammonium salt is used at a ratio of 0.4 to 30 % by weight based on the whole composition.

4. The process according to claim 1, **characterized in that** the hardening agent is used at a ratio of 40 to 60 parts by weight based on 100 parts by weight of the epoxy resin.

5. The process according to anyone of claims 1 to 4, **characterized in that** the mixture is stirred after adding the epoxy resin and after adding the hardening agent, respectively, for about ten minutes.

6. The process according to claim 5, **characterized in that** the volatilizing solvent is removed by purging with nitrogen for 24 hours.

7. The process according to one of the preceding claims, **characterized in that** the responsive membrane is punched out of the material obtained.

## Patentansprüche

1. Verfahren zur Herstellung einer Ansprechmembran zur Verwendung in chlorselektiven Elektroden, **dadurch gekennzeichnet,** daß man PVC in einem sich verflüchtigenden Lösungsmittel löst, ein quaternäres Ammoniumsalz zugibt, ein Epoxyharz in einem Verhältnis von 8:1 bis 1:2 mit Bezug auf PVC zugibt, die Mischung rührt, ein Härtungsmittel zugibt, die Mischung rührt, das sich verflüchtigende Lösungsmittel entfernt und die Mischung, ohne sie Licht auszusetzen, bei einer Temperatur von 60 ± 5°C erwärmt.

2. Verfahren nach Anspruch 1**, dadurch gekennzeichnet,** daß man das Epoxyharz in einem Verhältnis von 30 bis 50 Gew.-%, bezogen auf die gesamte Zusammensetzung, verwendet.

3. Verfahren nach Anspruch 1, **dadurch gekennzeichnet,** daß man das quaternäre Ammoniumsalz in einem Verhältnis von 0,4 bis 30 Gew.-%, bezogen auf die gesamte Zusammensetzung, verwendet.

4. Verfahren nach Anspruch 1, **dadurch gekennzeichnet,** daß man das Härtungsmittel in einem Verhältnis von 40 bis 60 Gew.-Teilen, bezogen auf 100 Gew.-Teile des Epoxyharzes, verwendet.

5. Verfahren nach mindestens einem der Ansprüche 1 bis 4, **dadurch gekennzeichnet,** daß man die Mischung nach Zugabe des Epoxyharzes und nach Zugabe des Härtungsmittels jeweils während etwa 10 Minuten rührt.

6. Verfahren nach Anspruch 5, **dadurch gekennzeichnet,** daß man das sich verflüchtigende Lösungsmittel durch Spülen mit Stickstoff während 24 Stunden entfernt.

7. Verfahren nach mindestens einem der vorangehenden Ansprüche, **dadurch gekennzeichnet,** daß man die Ansprechmembran aus dem erhaltenen Material ausstanzt.

## Revendications

1. Procédé de fabrication d'une membrane sensible destinée à être employée dans des électrodes sélectives à l'égard du chlore, caractérisé en ce qu'on dissout du PVC dans un solvant volatile, on ajoute un sel d'ammonium quaternaire, on ajoute une résine époxy selon un rapport de 8:1 à 1:2 par rapport au PVC, on agite le mélange, on ajoute un agent durcisseur, on agite le mélange, on élimine le solvant volatile, et on chauffe le mélange sans exposition à la lumière, à une température de 60 ± 5 ° C.

2. Procédé selon la revendication 1, caractérisé en ce que la résine époxy est employée selon une proportion de 30 à 50 % en poids par rapport à la composition totale.

3. Procédé selon la revendication 1, caractérisé en ce que le sel d'ammonium quaternaire est employé selon une proportion de 0,4 à 30 % en poids par rapport à la composition totale.

4. Procédé selon la revendication 1, caractérisé en ce que l'agent durcisseur est employé selon une proportion de 40 à 60 parties en poids pour 100 parties en poids de la résine époxy.

5. Procédé selon l'une quelconque des revendications 1 à 4, caractérisé en ce que le mélange est agité pendant environ 10 minutes, respectivement après addition de la résine époxy et après addition de l'agent durcisseur.

6. Procédé selon la revendication 5, caractérisé en ce que le solvant volatile est éliminé par purge avec de l'azote pendant 24 h.

7. Procédé selon l'une quelconque des revendications précédentes, caractérisé en ce que la membrane sensible est découpée par poinçonnage de la matière obtenue.

## Fig.1

## Fig.2

# Fig.3

## (A)

Interference by $HCO_3^-$

Concentration of $NaHCO_3$ added(m mol/$\ell$)

## (B)

Interference by $NO_3^-$

Concentration of $NaNO_3$ added(m mol/$\ell$)

# Fig.3

(C)

Interference by Br⁻

Concentration of NaBr added(m mol/ℓ)

(D)

Interference by I⁻

Concentration of NaI added(m mol/ℓ)

Fig.4